Europäisches Patentamt

(19) European Patent Office

Office européen des brevets

(11) Numéro de publication: **0 016 711**
A1

(12) **DEMANDE DE BREVET EUROPEEN**

(21) Numéro de dépôt: **80400386.1**

(22) Date de dépôt: **21.03.80**

(51) Int. Cl.³: **C 04 B 31/36**
C 04 B 31/40, C 04 B 13/00
B 27 K 3/16

(30) Priorité: **21.03.79 FR 7907096**

(43) Date de publication de la demande:
**01.10.80 Bulletin 80/20**

(84) Etats Contractants Désignés:
AT BE CH DE GB IT LU NL SE

(71) Demandeur: **Sorbier, Pierre**

**F-84210 - Pernes les Fontaines(FR)**

(72) Inventeur: **Sorbier, Pierre**

**F-84210 - Pernes les Fontaines(FR)**

(74) Mandataire: **Nony, Michel**
**29, rue Cambacérès**
**F-75008 Paris(FR)**

(54) Nouveau procédé pour fabriquer des produits présentant de bonnes propriétés d'isolation thermique et phonique à partir de matériaux ligneux et produits obtenus par ce procédé.

(57) On immerge un matériau ligneux dans une solution aqueuse, de préférence maintenue à ébullition, d'acide borique, on procède à un égouttage du matériau imprégné et à un rinçage à l'eau de façon à ramener le pH du matériau imprégné et égoutté à une valeur comprise entre environ 4 et environ 5, on imprègne ensuite de ciment artificiel par immersion et brassage le matériau imprégné, égoutté et rincé et on procède à un égouttage de façon à obtenir un granulat.
Application notamment à l'industrie du bâtiment.

EP 0 016 711 A1

Croydon Printing Company Ltd.

-1-

Nouveau procédé pour fabriquer des produits présentant
de bonnes propriétés d'isolation thermique et phonique
à partir de matériaux ligneux et produits obtenus par
ce procédé

La présente invention est relative à un nouveau procédé pour fabriquer des produits présentant de bonnes propriétés d'isolation, notamment thermique et phonique, à partir d'un granulat obtenu par traitement de matériaux ligneux, ainsi qu'aux produits obtenus par ce procédé.

Le déposant a déjà décrit dans ses demandes de brevets français n° 76.22542 et 77.16281 des procédés de fabrication d'objets résistants aux très fortes températures, notamment supérieures à 1000°C.

On peut ainsi grâce à ces procédés réaliser des éléments utilisables pour la construction tels que des boucliers thermiques ou des éléments de cloison pare-feu.

Les produits obtenus présentent un aspect remarquable et d'excellentes propriétés mécaniques et de tenue à la température et à l'humidité.

Cependant les procédés de fabrication sont relativement complexes à mettre en oeuvre.

La présente invention se propose de réaliser un nouveau procédé permettant de réaliser facilement des produits, notamment sous forme de panneaux, utilisables en particulier dans le domaine de la construction, et présentant de bonnes qualités d'isolation thermique et phonique, tout en étant d'une densité relativement faible et donc facilement transportables, et d'un prix de revient peu élevé.

Le procédé selon l'invention se caractérise essentiellement par le fait que l'on immerge un matériau ligneux dans une

-2-

solution aqueuse, de préférence maintenue à ébullition, d'acide borique, que l'on procède à un égouttage du matériau imprégné et à un rinçage à l'eau de façon à ramener le pH du matériau imprégné et égoutté à une valeur comprise entre environ 4 et environ 5, ce qui ignifuge le matériau, que l'on imprègne ensuite de ciment artificiel, par immersion et brassage, le matériau imprégné, égoutté et rincé, et que l'on procède à un égouttage.

A la suite de l'égouttage on obtient un granulat essentiellement végétal pouvant être lié, notamment dans une bétonneuse, de la même manière qu'un granulat purement minéral soit avec du ciment artificiel, soit avec du ciment fondu si l'on souhaite une meilleure tenue au feu.

Par matériau ligneux selon l'invention on entend de la sciure, des particules, des nodules, des copeaux, des faisceaux, de matériaux ligneux naturels, ou de matériaux synthétiques de nature cellulosique.

Pour la première phase d'imprégnation par immersion dans une solution aqueuse d'acide borique, on utilise de préférence une solution aqueuse maintenue à ébullition d'acide borique à une concentration de 20 g par litre environ, l'immersion s'effectuant par exemple, dans le cas d'utilisation de sciure pendant un temps d'environ 2 à 3 minutes, et par exemple dans le cas d'utilisation de nodules pendant un temps de l'ordre de 3 à 6 minutes environ.

Pour la seconde phase d'imprégnation, on utilise une solution aqueuse contenant au minimum environ 200 g de ciment artificiel par kilo de matériau ligneux imprégné, égoutté et rincé.

De préférence, il est avantageux de travailler dans cette seconde phase d'imprégnation à une température de l'ordre de 30 à 40°C. Cette phase d'imprégnation s'effectue pendant un temps supérieur à 1 heure.

La phase ultérieure d'égouttage s'effectue avantageusement en vidant le bac de traitement de la phase liquide, celle-ci pouvant être par la suite réutilisée. Dans le cas d'une mise en oeuvre en continu du procédé on ajuste en permanence le volume d'eau et de ciment au cours de la seconde phase d'imprégnation en fonction de l'alimentation en matériau imprégné égoutté et rincé.

On remarque que selon l'invention il n'y a aucun rejet extérieur tant au cours de la première qu'au cours de la seconde phase d'imprégnation.

Afin d'obtenir des caractéristiques bien définies de qualités mécaniques ou d'isolation thermique et phonique, on peut utiliser comme matériau ligneux de départ, un mélange de sciure, de nodules, de particules plus ou moins grossières de bois auquel on peut éventuellement incorporer du sable très fin.

Comme ciment artificiel, on utilise avantageusement un ciment de type Portland.

La présente invention a également pour objet les produits industriels nouveaux à base d'un granulat obtenu selon le procédé indiqué ci-dessus, ces produits ayant de très bonnes qualités mécaniques ainsi que d'excellentes propriétés de résistance à l'humidité et d'isolation thermique et phonique. En outre, les produits obtenus présentent une densité relativement faible, de l'ordre de 400 à 1200 kg/m3 et compte-tenu des matériaux utilisés pour leur fabrication sont d'un prix relativement peu élevé.

Le granulat obtenu par le procédé de traitement décrit ci-dessus peut être utilisé immédiatement ou conditionné en sacs pour une mise en oeuvre ultérieure. Comme indiqué plus

-4-

haut, il est possible d'utiliser ce matériau de la même manière qu'un granulat minéral en le liant soit avec du ciment fondu pour assurer une bonne tenue au feu en mélangeant un minimum de 300 g de ciment fondu par kilo de granulat, soit avec du ciment artificiel également en liant un minimum de 300 g d'un tel ciment artificiel par kilo de granulat.

Il est en outre avantageux de rajouter 100 à 200 g de carbonate de calcium par kilo de granulat.

Dans le cas de mise en oeuvre avec du ciment artificiel, il est avantageux d'ajouter environ 70 g de ciment fondu par kilo de granulat.

Le granulat lié obtenu grâce à l'invention se coule de la même manière qu'un béton minéral soit dans des coffrages, soit dans des moules non vibrants.

Si les moules utilisés sont placés dans une ambiance de vapeur à 50-70°C on assure la prise et le démoulage en un temps d'environ 50 à 60 minutes pour des panneaux et analogues ayant une épaisseur de 15 à 20 cm environ.

Il est également possible de tasser le granulat lié pour en augmenter la densité et la résistance à la compression.

La coulée en coffrage extérieure à température ambiante assure des temps de prises similaires à ceux des bétons traditionnels.

Il est ainsi possible de réaliser notamment pour l'industrie du bâtiment, des éléments préfabriqués faciles à fabriquer, d'un faible prix de revient et aisément transportables.

Le granulat lié peut également être projeté par des moyens appropriés, notamment mécaniques ou pneumatiques, pour

-5-

assurer par exemple la protection de charpentes métalliques.

Il est bien entendu que, bien que l'invention ait été décrite pour un mode de réalisation particulier, elle n'y est nullement limitée et qu'on peut lui apporter toutes modifications souhaitables sans pour autant sortir ni de son cadre, ni de son esprit.

Revendications de brevet

1. Procédé pour fabriquer des produits présentant de bonnes propriétés d'isolation, notamment thermique et phonique, à partir d'un granulat obtenu par traitement de matériaux ligneux, caractérisé par le fait que l'on immerge un matériau ligneux dans une solution aqueuse, de préférence maintenue à ébullition, d'acide borique, que l'on procède à un égouttage du matériau imprégné et à un rinçage à l'eau de façon à ramener le pH du matériau imprégné et égoutté à une valeur comprise entre environ 4 et environ 5, que l'on imprègne ensuite de ciment artificiel par immersion et brassage le matériau imprégné, égoutté et rincé et que l'on procède à un égouttage de façon à obtenir un granulat.

2. Procédé selon la revendication 1, caractérisé par le fait que l'on utilise pour la première phase d'imprégnation, une solution aqueuse d'acide borique à une concentration de 20g/litre environ, maintenue à ébullition.

3. Procédé selon l'une quelconque des revendications 1 et 2, caractérisé par le fait que pour la seconde phase d'imprégnation, on utilise une solution aqueuse contenant au minimum environ 200 g de ciment artificiel par kilo de matériau ligneux imprégné, égoutté et rincé.

4. Procédé selon l'une quelconque des revendications précédentes, caractérisé par le fait que la seconde phase d'imprégnation s'effectue à une température de l'ordre de 30 à 40°C.

5. Procédé selon l'une quelconque des revendications précédentes, caractérisé par le fait que la seconde phase d'imprégnation s'effectue pendant un temps supérieur à 1 heure.

6. Procédé selon l'une quelconque des revendications précédentes, caractérisé par le fait que l'on mélange au matériau ligneux de départ du sable très fin.

7. Procédé selon l'une quelconque des revendications précédentes, caractérisé par le fait qu'on lie le granulat obtenu en le mélangeant avec du ciment artificiel, en utilisant un minimum de 300 g de ciment artificiel par kilo de granulat.

8. Procédé selon l'une quelconque des revendications 1 à 6, caractérisé par le fait qu'on lie le granulat obtenu en le mélangeant avec du ciment fondu, en utilisant un minimum de 300 g de ciment fondu par kilo de granulat.

9. Procédé selon l'une quelconque des revendications 1 à 7, caractérisé par le fait que l'on ajoute au ciment artificiel du ciment fondu à raison d'environ 70 g de ciment fondu par kilo de granulat.

10. Procédé selon l'une quelconque des revendications 7 à 9, caractérisé par le fait que l'on rajoute au granulat du carbonate de calcium à raison d'environ 100 à 200 g de carbonate de calcium par kilo de granulat.

11. Procédé selon l'une quelconque des revendications 7 à 10, caractérisé par le fait que l'on coule le granulat lié dans un coffrage ou un moule non vibrant.

12. Procédé selon la revendication 11, caractérisé par le fait que les moules ou coffrages sont placés dans une ambiance de vapeur à une température d'environ 50 à 70°C.

13. Procédé selon l'une quelconque des revendications 7 à 10, caractérisé par le fait que l'on applique le granulat lié sur un support, notamment une charpente métallique, par projection.

14. Produit présentant de bonnes propriétés d'isolation notamment thermique et phonique, utilisable notamment comme élément préfabriqué dans la construction, caractérisé par le fait qu'il a été obtenu par le procédé selon l'une quelconque

-8-

des revendications 7 à 12 à partir d'un granulat obtenu par le procédé selon l'une quelconque des revendications 1 à 6.

| | Europäisches Patentamt | **EUROPÄISCHER RECHERCHENBERICHT** | Nummer der Anmeldung |
|---|---|---|---|
| | | | EP 80 40 0386 |

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | <u>FR - A - 2 391 975</u> (P. SORBIER)<br>  * Page 5, revendication 1 *<br><br>-- | 1,6,8,<br>14 |
| | <u>FR - A - 2 317 249</u> (CARTIERE <u>BURGO</u>)<br>  * Page 5, revendication 1;<br>  page 3, lignes 13-31; page 4,<br>  lignes 3-5 *<br><br>-- | 1,3,7,<br>14 |
| | <u>FR - A - 1 023 203</u> (J. DEWACHTER)<br>  * Résumé; point 2 *<br><br>-- | 9 |
| A | <u>FR - A - 1 425 853</u> (PAPIERFABR.<br><u>WILHELMSTAL WILHELM ERNST</u>)<br><br>---- | |

**KLASSIFIKATION DER ANMELDUNG (Int.Cl.³)**

C 04 B   31/36
          31/40
          13/00
B 27 K    3/16

**RECHERCHIERTE SACHGEBIETE (Int. Cl.³)**

C 04 B 31/00
        43/00
B 27 K  3/00
C 08 L 97/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort. | Abschlußdatum der Recherche | Prüfer |
|---|---|---|
| La Haye | 20-05-1980 | DAELEMAN |

EPA form 1503.1   06.78